# EUROPÄISCHE PATENTSCHRIFT

(11) **EP 2 687 109 B1**
(45) Veröffentlichungstag und Bekanntmachung des Hinweises auf die Patenterteilung: **20.04.2016**
(21) Anmeldenummer: 12177087.9
(22) Anmeldetag: 19.07.2012
(51) Int. Cl.: A23N 7/04

(54) **Vorrichtung und Verfahren zum Schälen von langgestrecktem Schälgut**
Device and method for peeling long goods to be peeled
Dispositif et procédé d'épluchage de produits à éplucher étendus en longueur

(43) Veröffentlichungstag der Anmeldung: 22.01.2014
(73) Patentinhaber: Hepro GmbH, 33378 Rheda-Wiedenbrück (DE)
(72) Erfinder: Protte, Christoph, 33129 Delbrück (DE)
(74) Vertreter: Ostermann, Thomas

(56) Entgegenhaltungen:
- DE-A1- 1 779 448
- DE-A1- 2 717 526
- DE-A1- 3 843 620
- US-A- 4 212 237
- US-A- 5 134 928

## Beschreibung

Die Erfindung betrifft eine Vorrichtung zum Schälen von langgestrecktem Schälgut mit einer Schneideinrichtung enthaltend eine Messerklinge zum Schälen des Schälguts, mit einer Transporteinrichtung zum Transportieren des Schälguts von einer ersten Schälstation zu einer zweiten Schälstation, wobei an den Schälstationen das Schälgut mittels der Schneideinrichtung geschält wird, mit einer Reinigungseinrichtung zum Reinigen von Messerklingen der Schneideinrichtung, wobei die Reinigungseinrichtung Mittel umfasst zur Abgabe eines Reinigungsfluidstrahls über eine Spüldüse an die Messerklinge gerichtet abgegeben wird. Ferner betrifft die Erfindung ein Verfahren zum Schälen von langgestrecktem Schälgut, wobei das Schälgut in einer Transportrichtung taktweise einer Mehrzahl von Schälstationen zugeführt wird, an denen das Schälgut mittels Messerklingen geschält und dann die Messerklingen mittels eines Reinigungsfluidstrahls gereinigt werden.

Aus der nachveröffentlichten europäischen Anmeldung EP-2502509-A2 ist eine Vorrichtung zum Schälen von langgestrecktem Schälgut bekannt, die mehrere Schälstationen aufweist. In den Schälstationen ist jeweils ein Schälgut in einer Schälposition gehalten und wird mittels einer Schneideinrichtung in Längsrichtung des Schälguts geschält. Nach dem Schälen wird das Schälgut mittels einer Transporteinrichtung zu der nächsten Schälstation bewegt, in der es in einem vorgegebenen Winkel um seine Längsachse verdreht für den nächsten Schneidvorgang bereitgestellt wird. Die Anzahl der Schälstationen ist so gewählt, dass nach Beendigung des Schälvorgangs an der letzten Schälstation das stangenförmige Schälgut vollständig geschält ist. Damit Messerklingen der Schneideinrichtung für den Schälvorgang von Schälgutresten und dergleichen befreit werden, ist eine Reinigungseinrichtung vorgesehen, die über Spüldüsen einen Reinigungsfluidstrahl auf die Messerklingen abgibt. Der Reinigungsfluidstrahl kann aus einer Reinigungsflüssigkeit bestehen, die mit Druckluft beaufschlagt ist.

Aus der US 4 212 237 A ist eine Vorrichtung zum Schälen von langgestrecktem Schälgut bekannt, bei der eine Schneideinrichtung ein Paar von Messerklingen aufweist. Eine Transporteinrichtung mit parallel verlaufenden Rollen ist vorgesehen, sodass das Schälgut sequentiell mehreren um 30° versetzt zueinander angeordneten Paaren von Messerklingen zugeführt werden kann. Maßnahmen zur Reinigung der Messerklingen sind nicht vorgesehen.

Aufgabe der vorliegenden Erfindung ist es, eine Vorrichtung sowie ein Verfahren zum Schälen von Schälgut anzugeben, dass auf einfache Weise die Reinigung von Messerklingen verbessert wird.

Zur Lösung dieser Aufgabe ist die erfindungsgemäße Vorrichtung in Verbindung mit dem Oberbegriff des Patentanspruchs 1 dadurch gekennzeichnet, dass eine Verdichtereinheit vorgesehen ist, so dass ein einziger Reinigungsfluidstrahl bestehend aus einem Gas-/Reinigungsflüssigkeits-Gemisch oder ein erster Reinigungsfluidstrahl bestehend aus einer Reinigungsflüssigkeit und ein weiterer zweiter Reinigungsfluidstrahl bestehend aus einem Gas unter Druck aus der Spüldüse austritt.

Der besondere Vorteil der Erfindung besteht darin, dass mittels einer Verdichtereinheit mindestens ein Reinigungsfluidstrahl erzeugbar ist, zur Befreiung von Messerklingen einer Schneideinrichtung von Schmutzpartikeln bzw. Schälresten. Der Reinigungsfluidstrahl weist ein unter einem solchen Druck stehendes Gas auf, mittels dessen die Messerklingen effektiv gereinigt werden können. Vorteilhaft ermöglicht die Erfindung eine reinigungsflüssigkeitssparende Reinigung der Messerklingen, die insbesondere für den mobilen Einsatz der Schälvorrichtung im Feld nützlich ist.

Nach einer ersten Variante der Erfindung erfolgt die Reinigung der Messerklingen mittels eines einzigen Reinigungsfluidstrahls, der aus einem Gas/Reinigungsflüssigkeits-Gemisch besteht. Es wird ein Vernebelungsstoß abgegeben, wobei durch die Ausrichtung einer den Reinigungsfluidstrahl abgebenden Spüldüse auf die jeweiligen Messerklingen der Reinigungseffekt vergrößert wird. Dadurch, dass die Reinigungsflüssigkeit mit dem Gas versetzt ist, kann der Verbrauch von Reinigungsflüssigkeit erheblich reduziert werden. Der Gasstoßanteil bewirkt insbesondere das Entfernen von Schalenresten wie Fasern und dergleichen.

Nach einer zweiten Variante der Erfindung wird ein erster Reinigungsfluidstrahl enthaltend Reinigungsflüssigkeit und ein weiterer zweiter Reinigungsfluidstrahl enthaltend Gas unter Druck aus vorzugsweise derselben Spüldüse in Richtung der Messerklinge abgegeben. Der erste Reinigungsfluidstrahl dient zum Benetzen der Messerklinge mit der Flüssigkeit. Der zweite Reinigungsflüssigkeitsstrahl ermöglicht durch den Gasstoß, vorzugsweise durch einen Luftstoß, das eigentliche Entfernen der Schälreste. Der erste Reinigungsfluidstrahl dient somit zur Vorreinigung, während der zweite Reinigungsfluidstrahl zur Hauptreinigung dient.

Vorzugsweise ist mindestens eine Spüldüse gerichtet zu den jeweiligen Messerklingen der Schälstationen angeordnet, so dass eine erhöhter Reinigungseffekt bei gleichem Ausstoßdruck erzielt wird.

Nach einer bevorzugten Ausführungsform der Vorrichtung weist eine Verdichtereinheit einen Kompressor zum Verdichten des Gases und/oder eine Pumpe zum Fördern der Reinigungsflüssigkeit aus einem Reinigungsflüssigkeitsbehälter auf. Der Kompressor dient vorzugsweise zum Verdichten von Luft, während die Pumpe vorzugsweise Frischwasser in Richtung der Spüldüse fördert. Vorzugsweise sind die Pumpe und der Kompressor über eine ersten Zuführleitung bzw. zweite Zuführleitung an derselben Spüldüse angeschlossen, so dass platzsparend der Ausstoß entweder eines Reinigungsflüssigkeits/Gasgemisches oder ein sequenzieller Ausstoß der Reinigungsflüssigkeit und des Gases gewährleistet ist.

Nach einer Weiterbildung der Erfindung ist in der zweiten Zuführleitung, die von dem Kompressor zu der Spüldüse führt, ein Druckventil zur Begrenzung des Gasausstoßdruckes vorgesehen. Ein in der zweiten Zuführleitung angeordnetes Wegeventil ermöglicht die zeitlich aufeinander abgestimmte Ansteuerung des Gasausstoßes zu der mittels der Pumpe bereitgestellten Reinigungsflüssigkeit.

Nach einer Weiterbildung der Erfindung kann eine dritte Zuführleitung vorgesehen sein, die die Spüldüse mit einem stationären Wasseranschluss verbindet. Handelt es sich um keine mobile Schälvorrichtung, kann somit auf einfache Weise Frischwasser als Reinigungsflüssigkeit in unbegrenzter Menge zugeführt werden.

Nach einer Weiterbildung der Erfindung zweigt von der zweiten Zuführleitung eine Nebenleitung ab in Richtung jeweils den Schälstationen zugeordneten weiteren Düsen, mittels derer Sensoren zur Schälguterkennung mit Druckluft reinigbar sind. Hierdurch kann eine Fehlfunktion der Sensoren in Folge des sich im Raum den Schälstationen einstellenden Reinigungsflüssigkeitsnebels (Wassernebels) verhindert werden.

Zur Lösung der Aufgabe ist die Erfindung in Verbindung mit dem Oberbegriff des Patentanspruchs 11 dadurch gekennzeichnet, dass zum Reinigen der Messerklingen ein erster Reinigungsfluidstrahl bestehend aus einer Reinigungsflüssigkeit und dann danach ein zweiter Reinigungsfluidstrahl bestehend aus einem Gas oder ein Reinigungsfluidstrahl bestehend aus einem Reinigungsflüssigkeits/Gas-Gemisch auf die Messerklinge gerichtet wird.

Der besondere Vorteil des erfindungsgemäßen Verfahrens besteht insbesondere darin, dass mit dem zeitlich versetzten Ausstoß eines ersten Reinigungsfluidstrahls enthaltend einer Reinigungsflüssigkeit und einem nachfolgenden zweiten Reinigungsfluidstrahl enthaltend ein Gas, insbesondere Luft, eine effektive Reinigung von Messerklingen erzielt wird, wobei der Mengeneinsatz der Reinigungsflüssigkeit auf ein Minimum reduziert werden kann. Dies ist insbesondere vorteilhaft bei Einsatz von mobilen Schälvorrichtungen, die im Feld, beispielsweise an Verkaufsständen im Freien, positioniert sind. In diesem Fall kann die Reinigungsflüssigkeit lediglich im begrenzten Umfang durch Anschließen von Reinigungsfluidbehältern, beispielsweise Frischwasserkanistern, bereitgestellt werden.

Nach einer bevorzugten Ausführungsform des Verfahrens erfolgt das Reinigen der Messerklingen durch den Ausstoß während des Schälvorganges oder zwischen zwei Schälvorgängen. Die Reinigung während des Schälvorgangs kann vorzugsweise bei Schälvorrichtungen eingesetzt werden, bei denen das langgestreckte Schälgut in Längsrichtung derselben nacheinander zu einer Anzahl von Schälstationen bewegt wird, wobei in den Schälstationen jeweils eine Schneideinrichtung mit Messerklingen ortsfest angeordnet ist. Dabei sind die Messerklingen der einen Schälstation relativ zu Messerklingen einer anderen Schälstation in einem vorgegebenen Drehwinkel um die Längsrichtung des Schälgutes versetzt angeordnet, so dass nach Durchlaufen aller Schälstationen das langgestreckte Schälgut vollständig geschält ist. Handelt es sich um eine Schälvorrichtung, bei der das langgestreckte Schälgut nicht kontinuierlich in seiner Längsrichtung zwischen den Schälstationen transportiert wird, sondern taktweise zwischen den Schälstationen quer zur Längserstreckung des Schälgutes, werden die Messerklingen vorzugsweise kurz vor Beginn des nächsten Schälvorganges gereinigt. Hierbei ist die Schneideinrichtung mit den Messerklingen in Längsrichtung des Schälgutes zum Schälen beweglich gelagert, während das Schälgut in der Schälstation ortsfest gehalten ist.

Nach einer bevorzugten Ausführungsform der Erfindung erfolgt eine Ansteuerung derart, dass der zweite Reinigungsfluidstrahl unmittelbar nach dem ersten Reinigungsfluidstrahl ausgestoßen wird. Auf diese Weise kann eine schnelle und effektive Reinigung der Messerklingen erfolgen, wobei der erste Reinigungsfluidstrahl zu einer Benetzung der Messerklingen mit Flüssigkeit und der zweite Reinigungsfluidstrahl zu einem endgültigen Entfernen der Schmutzartikel führen.

Nach einer bevorzugten Ausführungsform der Erfindung wird das Schälgut sequenziell den Schälstationen zugeführt, wobei das Schälgut in einer ersten Schälstation mittels Messer der Schneideinrichtung in einer ersten Drehlage und in einer zweiten Schälstation mittels Messer der Schneideinrichtung in einer zweiten Drehlage geschält wird, wobei die zweite Drehlage in einen Drehwinkel um die Längsachse des Schälgutes verdreht zu der ersten Drehlage verläuft. Hierdurch wird sichergestellt, dass nach Durchlaufen aller Schälstationen das Schälgut voll umfänglich geschält ist.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine schematische Darstellung einer Schälvorrichtung nach einer ersten Ausführungsform,
- Figur 2: ein Schaltplan für eine jeweils Schälstationen der Vorrichtung zugeordneten Reinigungseinrich tung,
- Figur 3: ein Blockschaltbild einer Schälvorrichtung nach einer zweiten Ausführungsform und
- Figur 4: ein Zeitdiagramm für die Ansteuerung der Schälvorrichtung gemäß Figur 3.

Eine erfindungsgemäße Vorrichtung zum Schälen von langgestrecktem Schälgut kann vorzugsweise zum Schälen von Spargelstangen vorgesehen sein. Die Spargelschälvorrichtung kann als ein autark arbeitender Schälautomat platzsparend an einem beliebigen Ort aufgestellt sein, beispielsweise an einem Verkaufsstand im Freien ohne Anschluss an das öffentliche Wassernetz. Er benötigt zum Betrieb lediglich einen elektrischen Anschluss für das Betreiben der elektrischen Betriebsmittel des Schälautomaten.

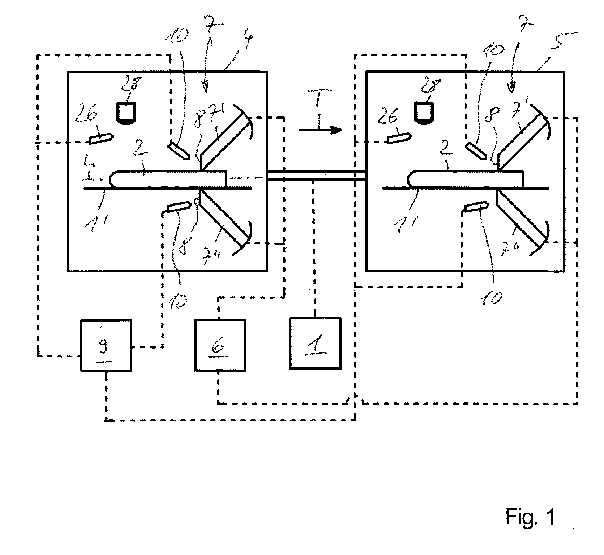

Nach einer ersten Ausführungsform einer Schälvorrichtung gemäß Figur 1 weist eine Spargelschälvorrichtung eine Transporteinrichtung 1 auf, mittels derer das Schälgut (Spargelstangen) 2 linear, vorzugsweise in horizontaler Richtung entlang einer Längserstreckung der Spargelstangen 2 von einer ersten Schälstation 4 zu einer zweiten Schälstation 5 bewegt wird. Die Transporteinrichtung 1 kann beispielsweise ein Förderband 1' umfassen, auf dem die Spargelstangen 2 aufliegen und nacheinander den Schälstationen 4, 5 zugeführt werden. Das Förderband 1' kann mit einer konstanten Geschwindigkeit betrieben werden, so dass die Spargelstangen 2 kontinuierlich von einer nicht dargestellten Zuführeinheit über die Schälstationen zu einer nicht dargestellten Ausgabeeinheit transportiert werden kann. Zwischen der Zuführeinheit und der Ausführeinheit ist eine solche Anzahl von Schälstationen angeordnet, so dass nach Durchlauf der Schälstationen die Spargelstangen 2 vollständig geschält sind. Hierzu ist eine Schneideinrichtung 6 vorgesehen, die eine Anzahl von jeweils den Schälstationen 4, 5 zugeordneten Messerpaaren 7 aufweist.

Die Messerpaare 7 umfassen zwei bezüglich einer Längsachse L der Spargelstangen 2 gegenüber angeordnete Messer 7', 7", die jeweils über eine Messerklinge 8 verfügen. Damit eine vollumfängliche Schälung der Spargelstangen 2 gewährleistet ist, weist die Schälvorrichtung sechs Schälstationen auf, bei denen die Messerpaare 7 der Schälstationen jeweils um 30° versetzt bezogen auf die Längsachse L bzw. einer Transportrichtung T der Transporteinrichtung 1 angeordnet sind. Die Spargelstangen 2 werden in Transportrichtung T entlang ihrer Längsachse L von der Zuführeinheit über die Schälstationen zu der Abführeinheit transportiert, während die Messerpaare 7 in den entsprechenden Schälstationen 4, 5 durch Anlage ihrer Messerklingen 8 an längsseitigen Umfangsbereichen der Spargelstangen 2 sequenziell unterschiedliche längsverlaufende Umfangsbereiche der Spargelstangen 2 schälen.

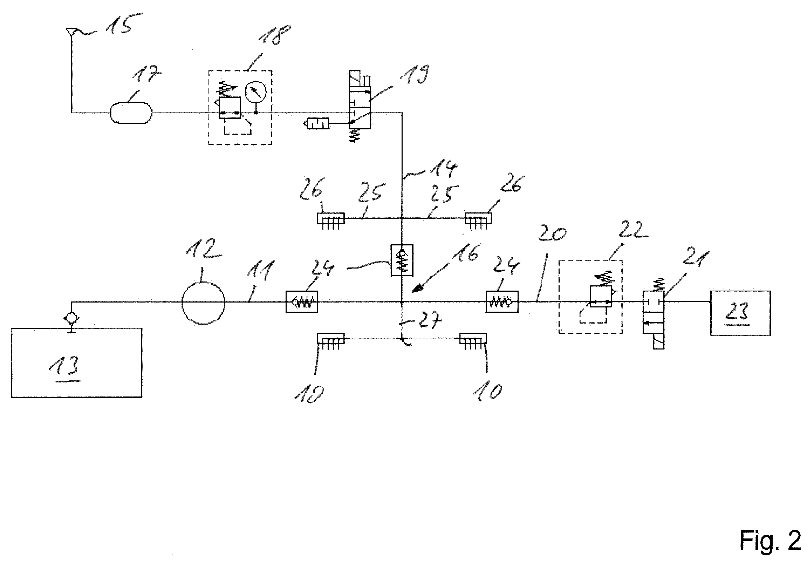

Ferner umfasst die Schälvorrichtung eine Reinigungseinrichtung 9, mittels derer Messerklingen 8 der Messerpaare 7 von Schmutzpartikeln bzw. Schäl- oder Faserresten befreit werden. Hierzu ist jedem Messerpaar 7 und/oder jeder Messerklinge 8 eine Spüldüse 10 zugeordnet, aus der nach einer ersten Variante der Erfindung ein einziger Reinigungsfluidstrahl abgegeben wird. Der Reinigungsfluidstrahl besteht aus einem Gas/Reinigungsflüssigkeits-Gemisch, das gemäß einer Ansteuerschaltung nach Figur 2 erzeugt wird.

Aus Figur 2 ist zu entnehmen, dass die jeweils den Messerklingen 8 zugeordneten Spüldüsen 10 über eine erste Zuführleitung 11 mit einer Pumpe 12 und einem Frischwasserbehälter 13 verbunden sind. Die Spüldüsen 10 sind über eine zweite Zuführleitung 14 mit einem Kompressor 15 zum Verdichten des Gases, insbesondere Luft, verbunden. In der zweiten Zuführleitung 14 ist zwischen dem Kompressor 15 und einer Verbindungsstelle 16, an der die erste Zuführleitung 11 und die zweite Zuführleitung 14 zusammenlaufen, ein Speicher 17, ein Druckventil 18 und ein Wegeventil 19 angeordnet. Das Druckventil 18 ist als ein Druckregelventil ausgebildet, mittels dessen Luft konstanten Drucks bereitgestellt wird. Das Wegeventil 19 ist als 3/2-Wegeventil ausgebildet, das entweder in Durchlassstellung oder in Sperrstellung elektromagnetisch betätigbar ist.

Der Frischwasserbehälter 13 kann beispielsweise als ein 20-Liter-Kanister ausgebildet sein, in dem Frischwasser enthalten ist. Die Pumpe 12 kann beispielsweise als eine 24-Volt-Trinkwasserpumpe ausgebildet sein, so dass die Schälvorrichtung mit einer Kleinspannung, beispielsweise 24 Volt Gleichspannung, betreibbar ist. Gegebenenfalls können auch mehrere Trinkwasserkanister angeschlossen sein.

Die Pumpe 12 und der Kompressor 15 bilden zusammen eine Verdichtereinheit, wobei der Kompressor 15 Luft verdichtet zur Erzeugung einer Druckluft und die Pumpe die Reinigungsflüssigkeit, vorzugsweise Frischwasser, vorgegebenen Drucks zu den Spüldüsen 10 fördert.

Befindet sich die Schälvorrichtung in der Nähe eines stationären Wasseranschlusses 23, kann eine dritte Zuführleitung 20 vorgesehen sein, die den stationären Wasseranschluss 23 mit der Verbindungsstelle 16 bzw. den Spüldüsen 10 verbindet. Die dritte Zuführleitung 20 weist ein 2/2-Wegeventil 21 sowie ein Druckventil (Druckregelventil) 22 auf. Wenn ein stationärer Wasseranschluss 23 vorhanden ist, wird die Pumpe 12 deaktiviert und das 2-Wege-Ventil 21 zur Zuführung der Reinigungsflüssigkeit entsprechend in Durchlass- oder Sperrstellung elektromagnetisch geschaltet.

Die erste Zuführleitung 11, die zweite Zuführleitung 14 und die dritte Zuführleitung 20 weisen jeweils ein Rückschlagventil 24 auf, das beispielsweise in der Nähe der Verbindungsstelle 16 angeordnet sein kann.

Von der zweiten Zuführleitung 14 zweigt eine Nebenleitung 25 zu jeweils den Schälstationen 4, 5 zugeordneten weiteren Düsen 26 ab, mittels derer Sensoren zur Schälguterkennung mit Druckluft reinigbar sind. Bei den Sensoren 28 kann es sich beispielsweise um Lichtsensoren handeln, mittels derer die Spargelköpfe erkannt werden.

Von der Verbindungsstelle 16 führt eine vierte Zuführleitung 27 direkt zu den Spüldüsen 10 der Messerklingen 8.

Nach der ersten Variante der Erfindung wird ein einziger Reinigungsfluidstrahl zur Reinigung der Messerklingen 8 erzeugt, und zwar nach jedem Schälvorgang. Hierzu wird im Sekunden- oder Millisekundenbereich gleichzeitig das 3-2-Wegeventil 19 in Durchgangsstellung geschaltet einerseits und die Pumpe 12 aktiviert andererseits. Das 2/2-Wegeventil 21 befindet sich in einer Sperrstellung. Auf diese Weise wird ein Reinigungsflüssigkeits/Luftgemisch über die Spüldüsen 10 an die Messerklingen abgegeben, und zwar stoßartig. Gleichzeitig wird ein Druckluftstoß über die weiteren Düsen 26 an die Sensoren zur Reinigung derselben abgegeben.

Befindet sich die Schälvorrichtung in der Nähe eines stationären Wasseranschlusses 23 wird statt der Pumpe 12 über das 2/2-Wegeventil 21 das unter Druck stehende Frischwasser den Spüldüsen 10 zugeführt.

Die zum Reinigen der Messerklinge 8 über die Spüldüse 10 abgegebene Reinigungsflüssigkeit wird dann in einem nicht dargestellten Sammelbehälter gesammelt. Der Sammelbehälter ist entfernbar von der Vorrichtung gelagert, so dass er nach einer bestimmten Zeit geleert werden kann. Durch den erfindungsgemäßen Aufbau und Ansteuerung der Reinigungseinrichtung 9 kann der Wasserverbrauch auf 40 l pro Stunde reduziert werden. Nach einer alternativen Ausführungsform kann auf den Sammelbehälter verzichtet werden, wenn ein Abfluss oder eine Abflussleitung vorhanden sind.

Nach einer alternativen Ausführungsform der Erfindung kann dieser Reinigungsstoßvorgang auch nach jedem zweiten oder dritten Schälvorgang erfolgen, wenn ein geringerer Reinigungsbedarf besteht.

Nach einer zweiten Variante der Erfindung erfolgt die Reinigung der Messerklingen 8 zweistufig. In einem ersten Schritt wird nur die Pumpe 12 eingeschaltet oder das 2/2-Wegeventil 21 in Durchlassstellung geschaltet. Auf diese Weise werden die Messerklingen 8 mit Reinigungsflüssigkeit angefeuchtet. Die Aktivierung der Pumpe 12 bzw. die Durchlassstellung des 2/2-Wegeventils 21 erfolgt in 10tel Sekundenbereich. Mit Deaktivierung der Pumpe 12 bzw. Verbringen des 2/2-Wegeventils 21 in die Sperrstellung wird gleichzeitig das 3/2-Wegeventil 19 in Durchlassstellung geschaltet, so dass unmittelbar anschließend ein zweiter Reinigungsflüssigkeitsstrahl bestehend aus Luft stoßartig über die Spüldüsen 10 auf die Messerklingen 8 verbracht wird. Dieser Druckluftstoß bewirkt ein Entfernen der Schmutzpartikel bzw. Schälreste von den Messerklingen 8. Dieser zweite Reinigungsflüssigkeitsstrahl hat eine Dauer, die ebenfalls im 10tel Sekundenbereich liegt. Beispielsweise können der erste Reinigungsfluidstrahl und der zweite Reinigungsfluidstrahl gleich lang ausgestoßen werden.

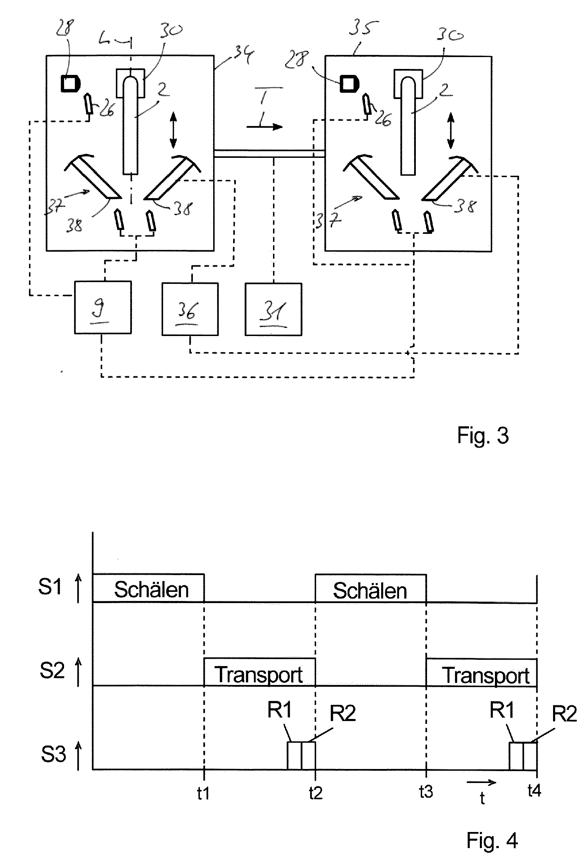

Nach einer weiteren Ausführungsform der Erfindung gemäß der Figur 3 kann eine Spargelschälvorrichtung vorgesehen sein, bei der die Spargelstangen 2 im Unterschied zu der Ausführungsform nach Figur 1 in einer Aufnahme 30 vertikal gehalten sind und mittels einer Transporteinrichtung 31 in horizontaler Transportrichtung T quer zur Längsachse L der Spargelstangen 2 zwischen den Schälstationen, von denen in Figur 3 exemplarisch eine erste Schälstation 34 und eine zweite Schälstation 35 dargestellt sind, bewegt werden. Wie nach der ersten Ausführungsform der Erfindung ist eine Schneideinrichtung 36 mit Messerpaaren 37 und Messerklingen 38 vorgesehen. Im Unterschied zu der ersten Ausführungsform sind die Messerpaare 37 in vertikaler Richtung beweglich gelagert, so dass das Schälen durch wahlweises und taktweises Ansteuern der Transporteinrichtung 31 und der Schneideinrichtung 36 erfolgt. Wenn in der ersten Schälstation 34 durch Ansteuerung der Schneideinrichtung 36 mittels eines Steuersignals S1 die Spargelstange 2 in der ersten Schälstation 34 durch Hochfahren der Messerpaare 37 geschält wird, ist dieser Schälvorgang nach einem Zeitintervall t1 abgeschlossen. Die Messerpaare 37 befinden sich wieder in einer unteren Position, so dass die Spargelstangen 2 durch Ansteuern der Transporteinrichtung 31 mittels eines Transportsignals S2 zu der nächsten Schälstation bewegt werden. Der Transportvorgang ist beispielsweise zum Zeitpunkt t2 beendet. In der nächsten Schälstation, beispielsweise der zweiten Schälstation 35 im Vergleich zur ersten Schälstation 34, befinden sich die Messerpaare 37 in einer um die Längsachse L der Spargelstangen 2 versetzten Drehlage, so dass andere längsseitigen Umfangsabschnitte der Spargelstangen 2 durch den nachfolgenden Schälvorgang geschält werden können. Bei einem Drehwinkelversatz von 30° sind sechs Schälstationen vorgesehen, um eine vollumfängliche Schälung der Spargelstangen 2 zu gewährleisten.

Kurz vor Ende des zum Zeitpunkt t2 endenden Transportvorgangs erfolgt die Ansteuerung S3 der Reinigungseinrichtung 9, wobei zuerst der erste Reinigungsstrahl R1 und unmittelbar anschließend der zweite Reinigungsstrahl R2 über die entsprechenden Sprühdüsen 10 abgegeben werden. Die Reinigung der Messerklingen 38 erfolgt somit durch die stationär angeordneten Spüldüsen 10 in einer unteren Position derselben, vorzugsweise unmittelbar vor Beginn des nächsten Schälvorganges, bei dem die Messerpaare 37 unter Anlage der Messerklingen 38 nach oben bewegt werden.

Nach einer alternativen Ausführungsform der Erfindung kann für diese Schälvorrichtung auch Reinigung mittels eines einzigen Reinigungsfluidstrahles - wie oben beschrieben - erfolgen.

Nach einer weiteren Ausführungsform der Erfindung können die oben beschriebenen Merkmale auch in einer nicht dargestellten Kombination Verwendung finden. Die gezeigten und beschriebenen Ausführungsbeispiele sind nicht als abschließende Aufzählung zu verstehen, sondern haben viel mehr beispielhaften Charakter für die Erfindung.

## Patentansprüche

1. Vorrichtung zum Schälen von langgestrecktem Schälgut (2) mit einer Schneideinrichtung (6) enthaltend eine Messerklinge (8) zum Schälen des Schälguts (2), mit einer Transporteinrichtung (1) zum Transportieren des Schälguts (2) von einer ersten Schälstation (4, 34) zu einer zweiten Schälstation (5, 35), wobei an den Schälstationen (4, 5; 34, 35) das Schälgut (2) mittels der Schneideinrichtung (6) geschält wird, mit einer Reinigungseinrichtung (9) zum Reinigen von Messerklingen (8) der Schneideinrichtung (6), wobei die Reinigungseinrichtung (9) Mittel umfasst zur Abgabe eines Reinigungsfluidstrahls (R1, R2) über eine Spüldüse (10) an die Messerklinge (8), **dadurch gekennzeichnet, dass** eine Verdichtereinheit vorgesehen ist, so dass
- ein einziger Reinigungsfluidstrahl bestehend aus einem Gas-/Reinigungsflüssigkeits-Gemisch oder
- ein erster Reinigungsfluidstrahl (R1) bestehend aus einer Reinigungsflüssigkeit und ein weiterer zweiter Reinigungsfluidstrahl (R2) bestehend aus einem Gas unter Druck aus der Spüldüse (10) austritt.

2. Vorrichtung nach Anspruch 1, **dadurch gekennzeichnet, dass** die Verdichtereinheit einen Kompressor (15) zum Verdichten des Gases und/oder eine Pumpe (12) zum Fördern der Reinigungsflüssigkeit aus einem Reinigungsflüssigkeitsbehälter (13) aufweist.

3. Vorrichtung nach Anspruch 1 oder 2, **dadurch gekennzeichnet, dass** die Pumpe (12) über eine erste Zuführleitung (11) mit den Spüldüsen (10) und der Kompressor (15) über eine zweite Zuführleitung (14) mit denselben Spüldüsen (10) verbunden ist.

4. Vorrichtung nach Anspruch 3, **dadurch gekennzeichnet, dass** die zweite Zuführleitung (14) ein Druckventil (18), insbesondere ein Druckregelventil, und ein Wegeventil (19), insbesondere ein 3/2-Wegeventil, aufweist.

5. Vorrichtung nach einem der Ansprüche 3 oder 4,
**dadurch gekennzeichnet, dass** die Spüldüse (10) über eine dritte Zuführleitung (20) mit einem stationären Wasseranschluss (23) verbindbar ist, wobei die dritten Zuführleitung (20) ein Druckventil (22) aufweist.

6. Vorrichtung nach einem der Ansprüche 3 bis 5,
**dadurch gekennzeichnet, dass** die zweite Zuführleitung (14) und die erste Zuführleitung (11) und/oder die dritte Zuführleitung (20) an einer Verbindungsstelle (16) zusammenlaufen, von der aus eine vierte Zuführleitung (27) direkt zu den Spüldüsen (10) verläuft.

7. Vorrichtung nach Anspruch 5 oder 6, **dadurch gekennzeichnet, dass** in der ersten Zuführleitung (11) und in der zweiten Zuführleitung (14) und in der dritten Zuführleitung (20) jeweils ein Rückschlagventil (24) angeordnet ist.

8. Vorrichtung nach einem der Ansprüche 3 bis 7,
**dadurch gekennzeichnet, dass** von der zweiten Zuführleitung (14) eine Nebenleitung (25) abragt zu jeweils den Schälstationen (4, 5, 34, 35) zugeordneten weiteren Düsen (26), mittels derer Sensoren (28) zur Schälguterkennung mit Druckluft reinigbar sind.

9. Vorrichtung nach einem der Ansprüche 1 bis 8,
**dadurch gekennzeichnet, dass** der Reinigungsflüssigkeitsbehälter (13) als ein Trinkwasserkanister ausgebildet ist.

10. Vorrichtung nach einem der Ansprüche 1 bis 9,
**dadurch gekennzeichnet, dass** die an die Messerklingen (8, 38) abgegebene Reinigungsflüssigkeit direkt oder zur einem Abfluss in einem Sammelbehälter führbar ist zum Entfernen der Reinigungsflüssigkeit.

11. Verfahren zum Schälen von langgestrecktem Schälgut (2), wobei das Schälgut (2) in einer Transportrichtung (T) taktweise einer Mehrzahl von Schälstationen (4, 5; 34, 35) zugeführt wird, an denen das Schälgut (2) mittels Messerklingen (8) geschält und dann die Messerklingen (8, 38) mittels eines Reinigungsfluidstrahls gereinigt werden, **dadurch gekennzeichnet, dass** zum Reinigen der Messerklingen (8, 38) ein erster Reinigungsfluidstrahl (R1) bestehend aus einer Reinigungsflüssigkeit und dann ein zweiter Reinigungsfluidstrahl (R2) bestehend aus einem Gas einerseits oder ein Reinigungsfluidstrahl bestehend aus einem Reinigungsflüssigkeits/GasGemisch andererseits auf die Messerklinge (8, 38) unter Druck gerichtet wird.

12. Verfahren nach Anspruch 11, **dadurch gekennzeichnet, dass** ein Wegeventil (19) und/oder eine Pumpe (12) derart angesteuert werden, dass das Reinigen der Messerklingen (8, 38) jeweils an den Schälstationen (4, 5; 34, 35) zwischen dem Schälvorgangende des einen Schälgutes (2) und dem Schälvorganganfang des in dieselbe Schälstation verbrachten weiteren Schälguts (2) erfolgt.

13. Verfahren nach Anspruch 12,
**dadurch gekennzeichnet,**
**dass** das Wegeventil (19) derart angesteuert wird, dass der zweite Reinigungsfluidstrahl (R2) unmittelbar nach dem ersten Reinigungsfluidstrahl (R1) abgegeben wird.

14. Verfahren nach einem der Ansprüche 11 bis 13,
**dadurch gekennzeichnet, dass** das Schälgut (2) sequentiell den Schälstationen (4, 5; 34, 35) zugeführt wird, wobei das Schälgut (2) in den Schälstationen jeweils um einen vorgegebenen Drehwinkel bezogen auf seine Längsachse (L) versetzt geschält wird.

15. Verfahren nach einem der Ansprüche 11 bis 14,
**dadurch gekennzeichnet, dass** gleichzeitig mit der Abgabe des zweiten Reinigungsfluidstrahls (R2) oder des Reinigungsfluidstrahls aus einem Reinigungsflüssigkeits/Gas-Gemisch an die Spüldüsen (10) ein Druckluftstrahl über weitere Düsen (26) an dem Schälgut (2) zugeordneten Sensoren (28) zur Reinigung derselben abgegeben wird.

## Claims

1. A device for peeling long goods to be peeled (2) having a cutting device (6) containing a knife blade (8) for peeling the goods to be peeled (2), having a transport device (1) for transporting the goods to be peeled (2) from a first peeling station (4, 34) to a second peeling station (5, 35), wherein the goods to be peeled (2) are peeled at the peeling stations (4, 5; 34, 35) by means of the cutting device (6), having a cleaning device (9) for cleaning the knife blades (8) of the cutting device (6), wherein the cleaning device (9) comprises means for outputting a cleaning fluid jet (R1, R2) onto the knife blade (8) via a rinsing nozzle (10), **characterized in that** a compressor unit is provided such that
- a single cleaning fluid jet consisting of a gas/cleaning fluid mixture, or
- a first cleaning fluid jet (R1) consisting of a cleaning fluid and a further, second cleaning fluid jet (R2) consisting of a gas under pressure is remitted from the rinsing nozzle (10).

2. The device according to Claim 1, **characterized in that** the compressor unit comprises a compressor (15) for compressing the gas and/or a pump (12) for conveying the cleaning fluid from a cleaning fluid container (13).

3. The device according to Claim 1 or 2, **characterized in that** the pump (12) is connected to the rinsing nozzles (10) via a first supply line (11) and the compressor (15) is connected to the same rinsing nozzles (10) via a second supply fine (14).

4. The device according to Claim 3, **characterized in that** the second supply line (14) comprises a pressure valve (18), in particular a pressure control valve, and a directional valve (19), in particular a 3/2-way valve.

5. The device according to any one of Claims 3 or 4, **characterized in that** the rinsing nozzle (10) can be connected to a stationary water supply (23) via a third supply line (20), wherein the third supply line (20) comprises a pressure valve (22).

6. The device according to any one of Claims 3 to 5, **characterized in that** the second supply line (14) and the first supply line (11) and/or the third supply line (20) converge at a connection point (16), from which a fourth supply line (27) extends directly to the rinsing nozzles (10).

7. The device according to Claim 5 or 6, **characterized in that** a non-return valve (24) is arranged in the first supply line (11) and in the second supply line (14) and in the third supply line (20) respectively.

8. The device according to any one of Claims 3 to 7, **characterized in that** an ancillary line (25) protrudes downwards from the second supply line (14) to additional nozzles (26) which are assigned to each of the peeling stations (4, 5, 34, 35), by means of which nozzles sensors (28) for identifying goods to be peeled can be cleaned with compressed air.

9. The device according to any one of Claims 1 to 8, **characterized in that** the cleaning fluid container (13) is configured as a drinking water tank.

10. The device according to any one of Claims 1 to 9, **characterized in that** the cleaning fluid output onto the knife blades (8, 38) can be conducted directly or can be conducted to a drain in a collecting tank in order to remove the cleaning fluid.

11. A method for peeling long goods to be peeled (2), wherein the goods to be peeled (2) are supplied in a transporting direction (T) in cycles to a plurality of peeling stations (4, 5; 34, 35), at which peeling stations the goods to be peeled (2) are peeled by means of knife blades (8) and then the knife blades (8, 38) are cleaned by means of a cleaning fluid jet, **characterized in that** in order to clean the knife blades (8, 38) a first cleaning fluid jet (R1) consisting of a cleaning fluid and then a second cleaning fluid jet (R2) consisting of a gas, on the one hand, or a cleaning fluid jet consisting of a cleaning fluid/gas mixture, on the other hand, is directed onto the knife blade (8, 38) under pressure.

12. The method according to Claim 11, **characterized in that** a directional valve (19) and/or a pump (12) is/are controlled such that the cleaning of the knife blades (8, 38) is, in each case, carried out at the peeling stations (4, 5; 34, 35) between the end of the peeling process of the one goods to be peeled (2) and the start of the peeling process of the additional goods to be peeled (2) transported into the same peeling station.

13. The method according to Claim 12, **characterized in that** the directional valve (19) is controlled such that the second cleaning fluid jet (R2) is output immediately after the first cleaning fluid jet (R1).

14. The method according to any one of Claims 11 to 13, **characterized in that** the goods to be peeled (2) are sequentially supplied to the peeling stations (4, 5; 34, 35), wherein the goods to be peeled (2) are, in each case, peeled offset by a specified angle of rotation relative to the longitudinal axis (L) thereof in the peeling stations.

15. The method according to any one of Claims 11 to 14, **characterized in that** at the same time as the second cleaning fluid jet (R2) or the cleaning fluid jet consisting of a cleaning fluid/gas mixture is output onto the rinsing nozzles (10), a jet of compressed air is output via other nozzles (26) onto sensors (28) assigned to the goods to be peeled (2) in order to clean the same.

## Revendications

1. Dispositif pour éplucher un produit à éplucher (2) allongé, avec un dispositif de coupe (6) comprenant une lame de couteau (8) pour éplucher ledit produit à éplucher (2), avec un dispositif de transport (1) pour le transport du produit à éplucher (2) d'une première station d'épluchage (4, 34) à une deuxième station d'épluchage (5, 35), sachant que le produit à éplucher (2) est épluché dans les stations d'épluchage (4, 5, 34, 35), au moyen du dispositif de coupe (6), et avec un dispositif de nettoyage (9) pour le nettoyage de lames de couteau (8) du dispositif de coupe (6), sachant que le dispositif de nettoyage (9) comprend des moyens pour l'émission d'un jet de fluide de nettoyage (R1, R2) sur la lame de couteau (8), par l'intermédiaire d'une buse de lavage (10), **caractérisé en ce qu**'est prévue une unité de compression de sorte que:
- un jet unique de fluide de nettoyage, consistant en un mélange de gaz et de liquide de nettoyage, ou
- un premier jet de fluide de nettoyage (R1), qui consiste en un liquide de nettoyage, et un deuxième jet de fluide de nettoyage, qui consiste en un gaz, sortent sous pression des buses (10).

2. Dispositif selon la revendication 1, **caractérisé en ce que** l'unité de campression présente un compresseur (15), qui est destiné à comprimer le gaz, et / ou une pompe (12), qui est destinée à convoyer le liquide de nettoyage à partir d'un conteneur de liquide de nettoyage (13)

3. Dispositif selon revendication 1 ou 2, **caractérisé en ce que** la pompe (12) est reliée aux buses de lavage (10) par l'intermédiaire d'une première conduite d'alimentation (11) et que le compresseur (15) est relié à ces mêmes buses de lavage (10) par l'intermédiaire d'une deuxième conduite d'alimentation (14).

4. Dispositif selon la revendication 3, **caractérisé en ce que** la deuxième conduite d'alimentation (14) présente une soupape de pression (18), en particulier une soupape de régulation de pression, et une soupape multivoies (19), en particulier une soupape 3/2 voies.

5. Dispositif selon l'une des revendications 3 ou 4, **caractérisé en ce que** la buse de lavage (10) peut être reliée à une prise d'eau fixe (23) par l'intermédiaire d'une troisième conduite d'alimentation (20), sachant que la troisième conduite d'alimentation (20) présente une soupape de pression (22).

6. Dispositif selon l'une des revendications 3 à 5, **caractérisé en ce que** la deuxième conduite d'alimentation (14) et la première conduite d'alimentation (11) et/ou la troisième conduite d'alimentation (20) convergent à un point de liaison (16), à partir duquel une quatrième conduite d'alimentation (27) s'étend jusqu'aux buses de lavage (10).

7. Dispositif selon revendication 5 ou 6, **caractérisé en ce que**, dans la première conduite d'alimentation (11), dans la deuxième conduite d'alimentation (14), et dans la troisième conduite d'alimentation (20), est respectivement agencée une soupape de non-retour (24).

8. Dispositif selon l'une des revendications 3 à 7, **caractérisé en ce que**, sur la deuxième conduite d'alimentation (14), une conduite secondaire (25) fait saillie à destination d'autres buses (26), qui sont respectivement associées aux stations d'épluchage (4, 5; 34, 35), et au moyen desquelles des détecteurs (28) de produit à éplucher peuvent être nettoyés à l'air comprimé.

9. Dispositif selon l'une des revendications 1 à 8, **caractérisé en ce que** le conteneur de liquide de nettoyage (13) présente la forme d'un bidon d'eau potable.

10. Dispositif selon l'une des revendications 1 à 9, **caractérisé en ce que** le liquide de nettoyage, lancé sur les lames de couteau (8, 38), peut être conduit, directement ou par une bouche d'écoulement, dans un bassin collecteur, pour l'élimination dudit liquide de nettoyage.

11. Procédé d'épluchage de produit à éplucher allongé (2), sachant que ledit produit à éplucher (2) est conduit rythmiquement, dans un dispositif de transport (T), à une pluralité de stations d'épluchage (4, 5 ; 34, 35) dans lesquelles ledit produit à éplucher (2) est épluché au moyen de lames de couteau (8) et lesdites lames de couteau (8, 38) sont ensuite nettoyées au moyen d'un jet de fluide de nettoyage, **caractérisé en ce que**, pour le nettoyage des lames de couteau (8, 38), un premier jet de fluide de nettoyage (R1), qui consiste en un liquide de nettoyage, et, d'une part, un deuxième jet de fluide de nettoyage (R2), qui consiste en un gaz ou, d'autre part, un jet de fluide de nettoyage, qui consiste en un mélange de liquide de nettoyage et de gaz, sont dirigé, sous pression, sur les lames de couteau (8, 38).

12. Procédé selon la revendication 11, **caractérisé en ce que** la soupape multivoies (19) et / ou la pompe (12) sont commandées de telle manière que le nettoyage des lames de couteau (8, 38) s'effectue aux stations d'épluchage (4, 5; 34, 35), chaque fois entre la fin du processus d'épluchage d'un produit à éplucher (2) et le début du processus d'épluchage d'un autre produit à éplucher (2) amené dans la même station d'épluchage.

13. Procédé selon la revendication 12, **caractérisé en ce que** la soupape multivoies (19) est commandée de telle marnière que le deuxième jet de fluide de nettoyage (R2) soit lancé directement après le premier jet de fluide de nettoyage (R1).

14. Procédé selon l'une des revendications 11 à 13, **caractérisé en ce que** le produit à éplucher (2) est amené séquentiellement aux stations d'épluchage (4, 5; 34, 35), sachant que ledit produit à éplucher (2) est épluché dans lesdites stations d'épluchage, en étant, chaque fois, déplacé d'un angle de rotation prédéterminé, par rapport à son axe longitudinal (L).

15. Procédé selon l'une des revendications 11 à 14, **caractérisé en ce que,** lorsque le deuxième jet de fluide de nettoyage (R2) ou le jet de fluide de nettoyage consistant en un mélange de liquide de nettoyage et de gaz, est délivré aux buses (10), un jet d'air comprimé est simultanément amené, par l'intermédiaire d'autres buses (26), aux détecteurs (28), associés aux produit à éplucher (2), pour le nettoyage de ceux-ci.
